# DEMANDE DE BREVET EUROPEEN

(11) **EP 2 762 762 A1**
(43) Date de publication de la demande: **06.08.2014**
(21) Numéro de dépôt: 14153094.9
(22) Date de dépôt: 29.01.2014
(51) Int. Cl.: F16L 55/033, F16L 55/035

(54) **Bride d'absorption acoustique**

(30) Priorité: 05.02.2013 FR 1350986
(71) Demandeur: Raccords et Plastiques Nicoll, 49300 Cholet (FR)
(72) Inventeur: Gauthier, Jean-Luc, 44830 Bouaye (FR)
(74) Mandataire: Sonnenberg, Fred

(57) **Abrégé**

Bride d'absorption acoustique (30) destinée à être fixée sur un élément de canalisation, comprenant une coquille (40), fixable sur un élément de canalisation, la coquille comprenant au moins un élément de fermeture (42) afin de se fermer autour de l'élément de canalisation, un matériau viscoélastique, contenu dans la coquille (40), et adapté pour absorber des vibrations, la bride (30) étant destinée à être fixée sur une section choisie de l'élément de canalisation de longueur inférieure à une longueur de l'élément de canalisation et non sur la longueur totale de l'élément de canalisation.

## Description

La présente invention concerne généralement le domaine de l'isolation phonique, plus particulièrement dans le bâtiment. Plus précisément, la présente invention concerne une bride d'absorption acoustique destinée à être fixée sur un élément de canalisation et un système de canalisation comprenant au moins une telle bride.

### Etat de la technique

Les eaux usées sont évacuées dans une canalisation appelée colonne, descente ou chute d'eaux usées, dans lesquelles les eaux usées sont récupérées et évacuées. Dans ces colonnes, l'eau circule et peut frapper les parois de la colonne dans laquelle l'eau descend, provoquant des bruits. De même, les eaux usées viennent frapper la canalisation lorsqu'elles arrivent au niveau de l'élément de récupération horizontale ou plus généralement lors de tout changement de direction.

Une fois les sources de bruit principales traitées, il y a toujours des émissions aux mêmes fréquences à d'autres endroits de la chute.

La présente invention a pour but d'améliorer les performances acoustiques de chutes destinées aux évacuations d'eaux usées.

### Résumé de l'invention

A cet effet, l'invention propose une bride d'absorption acoustique destinée à être fixée sur un élément de canalisation comprenant une coquille, fixable sur un élément de canalisation, la coquille comprenant au moins un élément de fermeture afin de se fermer autour de l'élément de canalisation, un matériau viscoélastique, contenu dans la coquille, et adapté pour absorber des vibrations. La bride est destinée à être fixée sur une section choisie de l'élément de canalisation inférieure et non sur la longueur totale de la canalisation. Ainsi, l'invention propose une bride d'isolation ou d'optimisation acoustique, comprenant un corps isolant ou corps absorbant apte à casser la propagation des ondes acoustiques se propageant le long d'un élément de canalisation.

Dans un mode de réalisation, la coquille est munie à ses deux extrémités de moyens complémentaires de verrouillage réglable, permettant de régler la circonférence de la bride en position verrouillée. Avantageusement, une bride peut être utilisée pour des éléments de canalisation de diamètre sensiblement différent tout en permettant une adaptation aux défauts de géométrie de l'élément de canalisation et/ou de la coquille avec son matériau viscoélastique. De plus, une telle bride présente une facilité de préhension et de mise en place. De plus, le verrouillage réglable permet d'assurer une fixation stable autour de l'élément de canalisation, ce qui est souhaitable lorsque des matériaux viscoélastiques, lourds, sont utilisés.

Dans un autre mode de réalisation, la coquille comprenant en outre un élément de fixation permettant sa fixation à un élément porteur de bâtiment. De préférence, l'élément de fixation comporte une tige filetée raccordée à un insert dans la coquille. En prévoyant une fixation à un élément porteur, la bride peut être utilisée à la fois comme élément acoustique mais également comme élément de fixation.

Dans un mode de réalisation préférentiel, le dit au moins un élément de fermeture comprend au moins l'un d'un clip ou d'une vis, qui sont avantageusement économiques et faciles d'utilisation.

De préférence, des moyens d'auto-serrage sont prévus, pour solliciter l'une vers l'autre deux extrémités libres de la coquille lorsque la bride est fixée sur un élément de canalisation. Ainsi, des variations de diamètre liées à la dilatation de la canalisation et l'écrasement du matériau viscoélastique, qui peuvent amener le relâchement du serrage de la coquille verrouillée sur l'élément de canalisation, la coquille pouvant ainsi glisser le long de l'élément de canalisation, peuvent être compensées par le moyen d'auto-serrage.

Avantageusement, le moyen d'auto-serrage est un ressort en compression au niveau de l'élément de fermeture. Un tel agencement est économique et facile à mettre en oeuvre.

L'invention propose également un système de canalisation comprenant un élément de canalisation ayant une première longueur. Le système comprend au moins deux brides d'absorption, une première bride étant positionnée à une première extrémité de l'élément de canalisation, une deuxième bride étant positionnée à une deuxième extrémité ou intermédiaire de l'élément de canalisation, de sorte de couvrir une longueur d'élément de canalisation inférieure à la première longueur de l'élément de canalisation. Ainsi, l'invention propose d'entourer localement et ponctuellement un élément de canalisation avec une bride comprenant un matériau apte à casser la propagation des ondes acoustiques et/ou absorber les ondes acoustiques se propageant le long de l'élément de canalisation, contrairement aux systèmes connus dans lesquels l'élément de canalisation est entouré sur toute sa longueur.

Dans un autre mode de réalisation préférentiel, le système comprend trois brides d'absorption, une première bride étant positionnée à une première extrémité de l'élément de canalisation, une deuxième bride étant positionnée à une deuxième extrémité de l'élément de canalisation, et une troisième bride étant positionnée sur l'élément de canalisation, distincte des première et deuxièmes brides. L'élément de canalisation peut être un élément de canalisation sensiblement vertical, mais l'élément de canalisation peut également être oblique ou horizontal.

### Brève description des figures

L'invention sera mieux comprise, et d'autres buts, détails, caractéristiques et avantages de celle-ci apparaitront plus clairement au cours de la description suivante de plusieurs modes de réalisation de l'invention, donnée à titre d'exemple non limitatif, en référence aux dessins suivants, parmi lesquels :
- la figure 1 montre un système de canalisation selon un premier aspect de la présente invention ;
- le figure 2 montre un système de canalisation selon un autre aspect de la présente invention ;
- la figure 3 montre une bride acoustique utilisable dans un système de canalisation selon un aspect de la présente invention
- la figure 4 montre une bride acoustique utilisable dans un système de canalisation selon un aspect de la présente invention,
- les figures 5a et 5b montrent encore une autre bride acoustique utilisable dans un système de canalisation selon un aspect de la présente invention,
- la figure 6 illustre une bride acoustique selon encore un autre aspect de la présente invention,
- la figure 7 illustre une bride acoustique selon encore un autre aspect de la présente invention,
- les figures 8 et 9 illustrent une bride acoustique selon un autre mode de réalisation de la présente invention.

### Description détaillée

Dans les différentes figures et vues, les mêmes numéros de référence indiquent des éléments ou composantes identiques ou similaires.

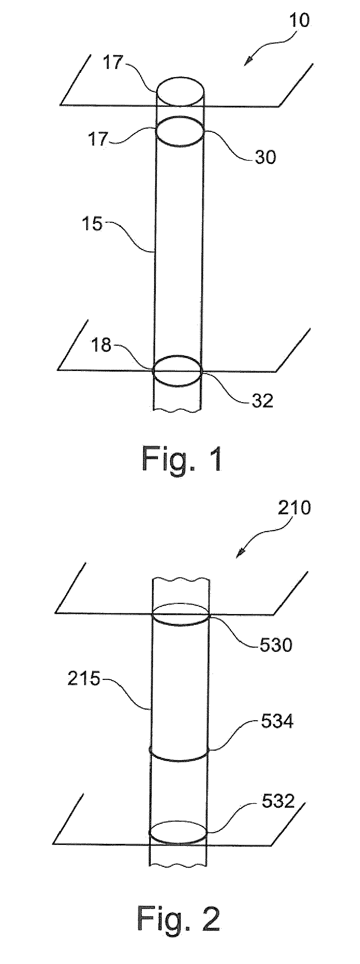

La figure 1 montre un système de canalisation 10, en particulier pour évacuation des eaux usées.

Le système de canalisation comprend un élément de canalisation 15, faisant partie d'une chute destinée à l'évacuation d'eaux usées. L'élément de canalisation, dans le mode de réalisation représenté, est sensiblement vertical, de longueur correspondant sensiblement à la hauteur d'une pièce d'habitation.

L'élément de canalisation peut être prolongé dans ses parties inférieure et supérieure, non représentées, ou couplé à d'autres éléments de canalisation.

L'élément de canalisation 15 est muni, au niveau d'une première extrémité 17, d'une première bride d'absorption acoustique 30. Une deuxième bride d'absorption acoustique 32, est positionnée à une deuxième extrémité 18 de l'élément de canalisation 15. Sur la figure 1, la première extrémité 17 est l'extrémité supérieure et la deuxième extrémité 18 est l'extrémité inférieure de l'élément de canalisation 15.

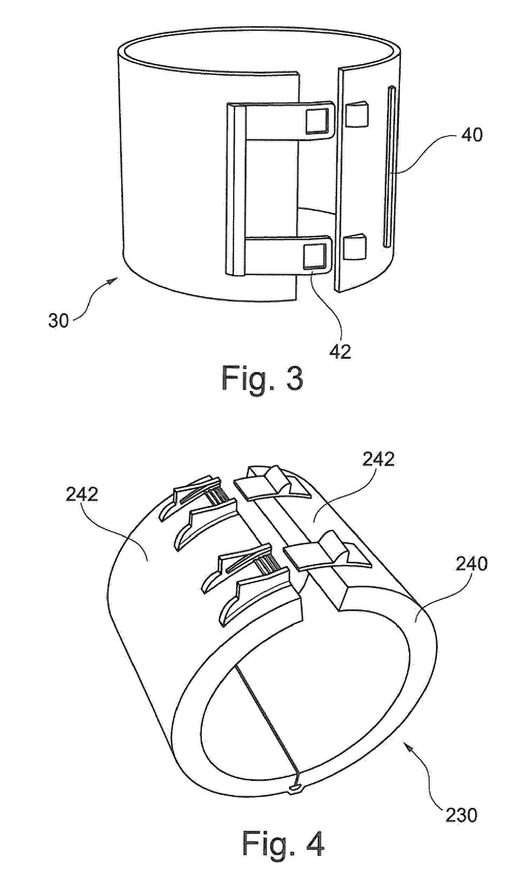

La première et la deuxième bride d'absorption acoustique, 30, 32, sont destinées à absorber et/ou casser les ondes acoustiques se propageant autrement dans l'élément de canalisation. Un exemple de bride 30, 32 est représenté à la figure 3. La description est faite en référence à la bride 30, la bride 32 étant sensiblement identique.

La bride 30 comprend une coquille 40, fixable sur l'élément de canalisation. La coquille 40 comprend un matériau d'isolation acoustique, adapté pour absorber ou atténuer les vibrations acoustiques. Un matériau viscoélastique peut être choisi pour ses propriétés isolantes. De préférence la coquille 40 est en matière plastique, mais la coquille 40 peut être en tout autre matériau adapté, tel qu'une résine par exemple.

Des éléments de clips 42 sont prévus, afin de se clipper autour de l'élément de canalisation. Les clips 42 de la figure 3 sont des clips standards. Ainsi, grâce à l'utilisation d'une bride, un matériau isolant peut être fixé, localement, autour d'une canalisation verticale, sans risque de décollement ultérieur.

A la figure 4, un autre mode de réalisation d'une bride 230 est illustré. La bride 230 comprend une coquille 240, fixable sur l'élément de canalisation. La coquille 240 comprend un matériau d'isolation acoustique, adapté pour absorber ou atténuer les vibrations acoustiques. Un matériau viscoélastique peut être choisi pour ses propriétés isolantes. De préférence la coquille 240 est en matière plastique. Des éléments de clips 242 sont prévus, afin de se clipper autour de l'élément de canalisation. Les clips 242 de la figure 4 sont des clips réglables. Avantageusement, des clips réglables permettent un réglage de la circonférence de la bride en position verrouillée sur l'élément de canalisation, permettant de s'adapter à la fois aux défauts de géométrie résultant de l'insertion du matériau isolant dans la coquille et/ou des irrégularités de l'élément de canalisation et/ou des tolérances de fabrication de la bride 230.

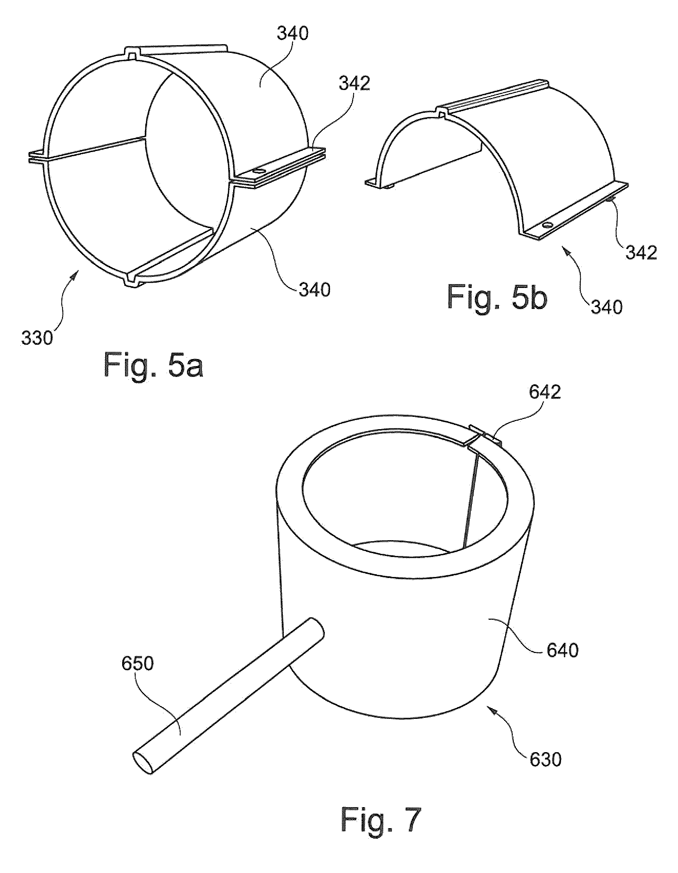

Les figures 5a et 5b illustrent encore un autre mode de réalisation d'une bride 330. La bride 330, illustrée à la figure 5a, comprend deux demi-coquilles 340, fixables sur l'élément de canalisation (figure 5b). Les demi-coquilles 340, similairement aux coquilles 40 et 240 des figures 3 et 4, comprennent un matériau d'isolation acoustique, adapté pour absorber ou atténuer les vibrations acoustiques. Des éléments de clips 342 sont prévus en tant qu'éléments de fermeture, afin de se clipper autour de l'élément de canalisation, pour coopérer avec les éléments clips d'une demi coquille 340 identiques, et former ainsi une bride complète 330.

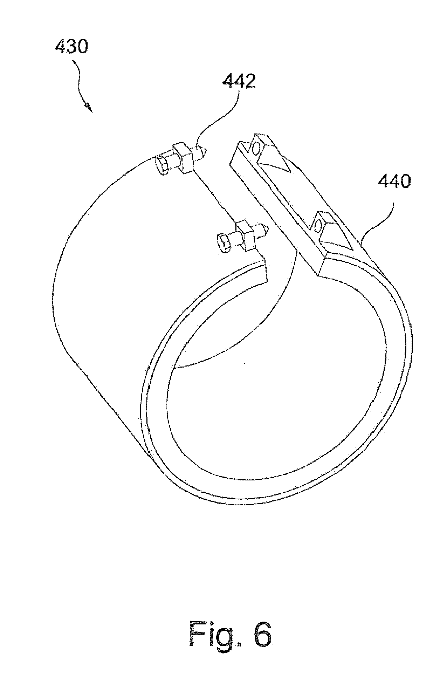

La figure 6 montre une bride 430 munie d'une coquille 440. La coquille 440 comprend un matériau d'isolation acoustique. Des éléments de vis 442 sont prévus, afin de permettre le maintien de la bride 430 autour d'un élément de canalisation autour duquel la bride 430 sera positionnée. Ainsi, dans le mode de réalisation de la figure 6, les éléments de fermeture de la bride sont des vis alors que dans le mode de réalisation des figures 4 et 5, les éléments de fermeture sont des clips.

L'homme du métier comprendra que la bride acoustique selon la présente invention n'est pas un élément de fixation mais un élément permettant d'absorber ou d'atténuer des ondes acoustiques. Dans un aspect de la présente invention, la bride acoustique peut également être munie d'un élément de fixation pour fixation à un élément porteur de bâtiment, par exemple un mur.

Ainsi, la figure 7 montre une bride 630 munie d'une coquille 640. La coquille 640 comprend un matériau d'isolation acoustique. Des éléments clips 642 sont prévus, afin de permettre le maintien de la bride 630 autour d'un élément de canalisation autour duquel la bride 630 sera positionnée. La bride 630 est également munie d'un élément de fixation 650 permettant sa fixation à un élément porteur de bâtiment (non représenté à la figure 7). L'élément porteur peut être par exemple un mur ou un poteau. L'élément de fixation 650 de la figure 6 comprend un insert apte à recevoir une tige filetée pour la fixation à l'élément porteur.

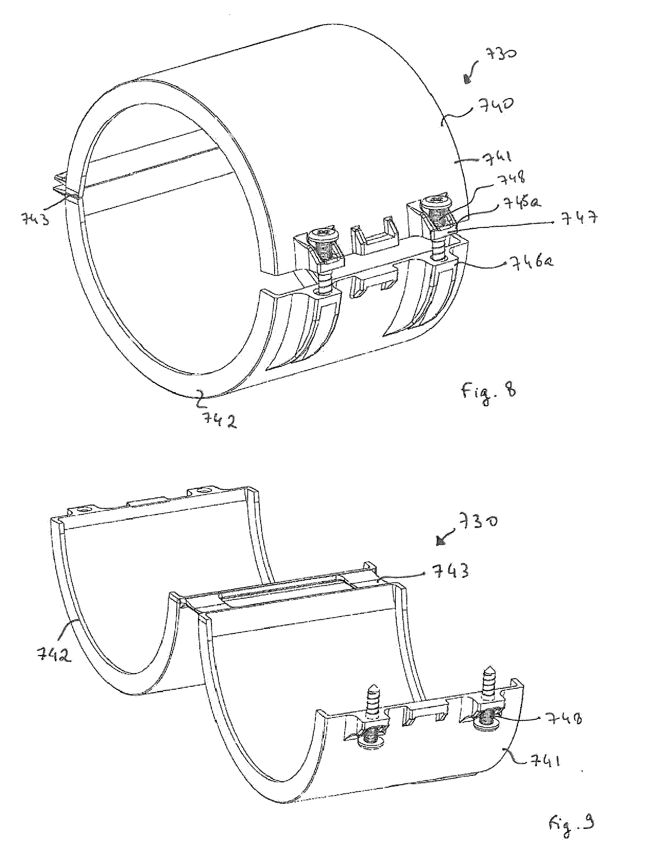

Les figures 8 et 9 montrent une bride 730 similaire à celle de la figure 6. La bride 730 est munie d'une coquille 740, formée par deux demi-coquilles 741, 742, articulées autour d'une charnière 743, avec une première extrémité libre 744a et une deuxième extrémité libre 744b. La charnière 743 représenté est une charnière à film, cet exemple n'est pas limitatif et tout type de charnière est bien entendu envisageable.

La coquille 740 comprend un matériau d'isolation acoustique, type viscoélastique. Deux premières projections radiales 745a sont agencées sur la surface circonférentielle externe de la première zone d'extrémité libre 744a, avec un plateau d'insertion 747 d'élément de vis 746a destinées à coopérer avec deux deuxièmes zones de projections radiales 745b agencées sur la surface circonférentielle externe de la deuxième extrémité libre 744b, avec un filetage 746b, pour la fixation et le maintien de la bride 740 autour d'un élément de canalisation autour duquel la bride 740 doit être positionnée. La bride 740 est également munie d'au moins un moyen de sollicitation ou auto-serrage 748, pour solliciter l'une vers l'autre la première extrémité libre 744a et la deuxième extrémité libre 744b, lorsque la bride 740 est fixée avec les éléments de vis 746a vissés dans les filetages 746b correspondants.

Dans le mode de réalisation représenté, le moyen d'auto-serrage 748 comprend un ressort en spirale, agencé en compression autour de l'élément de vis 746a, entre la tête de vis et le plateau d'insertion 747. Bien entendu, le nombre d'éléments de vis et de moyen d'auto-serrage peut varier, deux éléments de vis est un exemple non limitatif.

De manière avantageuse, le moyen d'auto-serrage permet de compenser les variations dues aux variations de volume du matériau viscoélastique, qui tend à se dilater sous la chaleur, et donc de la bride 740. Cette problématique de dilatation n'est pas présente avec les matériaux type plastique ou caoutchouc utilisé jusqu'à présent dans le domaine de l'isolation acoustique.

Le ressort est dimensionné de sorte de garantir un maintien de fixation en fonction de la dilation prévue du matériau viscoélastique.

Bien entendu, les modes de réalisation des brides des figures 3 à 9 ne sont pas exclusifs et les caractéristiques des brides illustrées sur les figures 3 à 9 peuvent être combinées.

Ainsi, grâce à la bride, le matériau isolant peut être positionné et maintenu localement sur un élément de canalisation, sans risque de chute ultérieure. Ceci permet ainsi de garantir un bon niveau de performance. De plus, il est possible d'utiliser localement des sections d'isolation, et non sur toute la longueur d'une canalisation, ce qui permet de réaliser des économies substantielles.

La première et la deuxième bride d'absorption acoustique, 30, 32, sont positionnées sur des sections distinctes, choisies, de l'élément de canalisation 15.

Ainsi, au lieu d'entourer complètement la canalisation d'un matériau acoustique, sur toute sa longueur, la présente invention propose d'entourer localement l'élément de canalisation d'un matériau spécifique afin d'absorber et/ou la propagation des ondes parcourant la canalisation. La figure 2 montre un système de canalisation 210 selon un deuxième aspect de la présente invention. Le système de canalisation 210 diffère principalement du système de canalisation 10 de la figure 1 par l'agencement des brides d'absorption.

Le système de canalisation 210 comprend un élément de canalisation 215 muni de trois brides d'absorption, 530, 532, 534. Une bride 530 est positionnée à une première extrémité de l'élément de canalisation, une deuxième bride 532 est positionnée à une deuxième extrémité de l'élément de canalisation, et une troisième bride 534 est positionnée sur l'élément de canalisation 215, distinctes des première et deuxièmes brides. Par exemple, la bride 530 peut être positionnée sous le plafond, et l'autre au dessus du plancher, la troisième quelque part entre les deux.

L'homme du métier comprendra que le positionnement d'au moins une bride, localement, permet de créer une zone d'absorption vibro-acoustique sur une zone du tube.

La demanderesse a constaté que l'utilisation d'une bride ou deux ou trois brides d'isolation, locales, sur des sections distinctes de l'élément de canalisation, permettent une très nette une amélioration de la performance acoustique de la chute.

Sur les figures, l'élément de canalisation est un élément de canalisation sensiblement vertical en position fonctionnelle. Ceci n'est pas limitatif et l'élément de canalisation peut également être oblique, avec des inclinaisons variées. Par exemple, dans le cas d'un dévoiement d'une chute d'eau standard entre deux étages, l'élément de canalisation peut être incliné de typiquement 45° par rapport à la verticale, ou, dans le cas d'un dévoiement sous plafond, l'élément de canalisation peut être incliné de sensiblement 87° par rapport à la verticale. De même l'élément de canalisation peut être horizontal, par exemple dans le cas d'un collecteur de récupération des eaux.

## Revendications

1. Bride d'absorption acoustique (30 ; 230 ; 330 ; 430 ; 530 ; 630) destinée à être fixée sur un élément de canalisation (15), comprenant
- une coquille (40 ; 240 ; 340 ; 440 ; 640), fixable sur un élément de canalisation, la coquille comprenant au moins un élément de fermeture (42 ; 242 ; 342 ; 442 ; 642) afin de fermer la coquille autour de l'élément de canalisation,
- un matériau viscoélastique, contenu dans la coquille, et adapté pour absorber des vibrations,
- la bride étant destinée à être fixée sur une section choisie de l'élément de canalisation inférieure à une longueur totale de l'élément de canalisation et non sur la longueur totale de l'élément de canalisation.

2. Bride d'absorption acoustique selon la revendication 1, ladite coquille (40 ; 240 ; 340 ; 440 ; 640) étant munie à ses deux extrémités des moyens complémentaires de verrouillage réglable, permettant de régler la circonférence de la bride (30 ; 230 ; 330 ; 430 ; 630) en position verrouillée.

3. Bride d'absorption acoustique selon l'une des revendications 1 et 2, ladite coquille (640) comprenant en outre un élément de fixation (650) permettant sa fixation à un élément porteur de bâtiment.

4. Bride d'absorption acoustique selon la revendication 3, l'élément de fixation (650) comportant une tige filetée raccordée à un insert dans la coquille.

5. Bride d'absorption acoustique selon l'une des revendications précédentes, dans laquelle le dit au moins un élément de fermeture comprend au moins l'un d'un clip ou d'une vis.

6. Bride d'absorption acoustique selon la revendication 5, comprenant également un moyen d'auto-serrage prévu pour solliciter l'une vers l'autre deux extrémités libres de la coquille lorsque la bride est fixée sur un élément de canalisation.

7. Bride d'absorption acoustique selon la revendication 6, le moyen d'auto-serrage étant un ressort en compression au niveau de l'élément de fermeture.

8. Système de canalisation (10 ; 210) comprenant
- un élément de canalisation (15 ; 215) ayant une première longueur,
- au moins deux brides d'absorption acoustique (30, 32 ; 530 ; 532 ; 534) selon l'une des revendications précédentes,
ladite bride étant positionnée sur une section distincte choisie de l'élément de canalisation (15 ; 215) de sorte de couvrir une longueur d'élément de canalisation inférieure à la première longueur de l'élément de canalisation,
- une première bride (30) étant positionnée à une première extrémité de l'élément de canalisation, une deuxième bride (32) étant positionnée à une deuxième extrémité ou intermédiaire, de l'élément de canalisation (15), de sorte de couvrir une longueur d'élément de canalisation inférieure à la première longueur de l'élément de canalisation.

9. Système de canalisation selon la revendication 8, comprenant trois brides d'absorption, une première bride (530) étant positionnée à une première extrémité de l'élément de canalisation, une deuxième bride (532) étant positionnée à une deuxième extrémité de l'élément de canalisation, et une troisième bride (534) étant positionnée sur l'élément de canalisation (215), distinctes des première et deuxièmes brides.
